# EUROPEAN PATENT SPECIFICATION

(11) **EP 4 483 339 B1**
(45) Date of publication and mention of the grant of the patent: **13.08.2025**
(21) Application number: 24729968.8
(22) Date of filing: 16.05.2024
(51) Int. Cl.: G06V 20/10

(54) **IMPROVED DRONE MONITORING METHOD AND SYSTEM**
VERBESSERTES DROHNENÜBERWACHUNGSVERFAHREN UND -SYSTEM
PROCÉDÉ ET SYSTÈME DE SURVEILLANCE DE DRONE AMÉLIORÉS

(30) Priority: 16.05.2023 EP 23173605
(43) Date of publication of application: 01.01.2025
(73) Proprietor: VITO NV (Vlaamse Instelling voor Technologisch Onderzoek NV), 2400 Mol (BE)
(72) Inventor: RAYMAEKERS, Dries, 2400 Mol (BE); PAULY, Klaas, 3001 Heverlee (BE)
(74) Representative: IPLodge bv
(86) International application number: PCT/EP2024/063471
(87) International publication number: WO 2024/236091

(56) References cited:
- CN-A- 106 643 529
- US-A1- 2021 142 559
- US-B1- 11 074 447
- FATHELRAHMAN EIHAB ET AL: "Unmanned Arial Vehicle (UAV) Imagery and Manual Sampling for Parasitic Weed Recognition and Measurements", 2019 INTERNATIONAL CONFERENCE ON ELECTRICAL AND COMPUTING TECHNOLOGIES AND APPLICATIONS (ICECTA), IEEE, 19 November 2019 (2019-11-19), pages 1 - 4, XP033690009, DOI: 10.1109/ICECTA48151.2019.8959613

## Description

### Technology

The present invention pertains to a drone monitoring method and system. Hereby, the invention aims to provide a way of obtaining highly detailed data of agricultural testing fields using an aerial drone.

### Background

Drones equipped with cameras often capture images of a particular area with a high image overlap, resulting in a lot of data to process photogrammetrically into a map or a 3D model of the area. For applications involving outdoor agriculture experiments (phenotyping), geometric accuracy of the final results is very important for the end-user to relate to specific field data.

Plant phenotyping on experimental fields quantifies and analyzes the physical and biochemical characteristics of plants/crops grown in different environments. Before the plants are grown, the researchers or breeders make an experimental design which determines which plant or plant-varieties are grown where on the field and which specific treatment will be applied throughout the growing season. The experimental design consists of a collection of plots, i.e. a group of identical plants which are grown close to each other and get the same treatments. Phenotypical data are usually collected or summarized at plot level, to take the variation of different individual plants within a plot into account.

Drone-based phenotyping involves using unmanned aerial systems (UAS, or drones) equipped with cameras to capture images of the experimental field and calculate specific plant characteristics, like emergence count, coverage, height, biomass, health, flowering time etc. The use of drones in phenotyping offers several advantages over traditional surveying methods, including the ability to measure plant traits more quickly, objective and without the need of human experts. One of the key techniques used in drone-based phenotyping is Structure from Motion (SfM), which involves using highly overlapping images (usually 70-80%) to create a 3D model and orthomosaic of the area. With the use of precise GPS measurements, either on the drone itself of with reference targets placed in the field, the drone image products can be georeferenced to 2-3cm accuracy which makes it possible to overlay a digital plot layout with details of the experiment based on which plot statistics of the drone products can be derived.

Direct georeferencing is an alternative image processing technology to relate image coordinates to real-word coordinates, often applied to more traditional aerial surveys. It is however less applied to drone based images because of the low accuracies of all required viewing geometries of the drone camera, which is required for accurate geometrical results.

A major technical obstacle to using the methods and systems of the prior art, and in particular of US11074447, is the large amount of data, typically in the form of images, that is obtained and that needs to be processed. Indeed, it is estimated that in order to obtain a full view of an area, about 70% to 80% of the imaging data can be superfluous, typically because of overlaps which are taken for allowing stitching of the images. This sets severe limitations on the data recording, data transfer and/or data analysis accompanying a drone monitoring system and method. The present invention aims to overcome this problem and presents a solution which limits the data that is required for further use.

US11074447 discloses a land analysis system which uses drone-captured images to detect plant health and/or soil moisture levels at a site. For example, the system instructs a drone to fly along a flight path, capture images of the land below, and measure altitude data. The system processes the images using, for example, artificial intelligence, to identify locations at which plant material may be present. The system then further processes the images to identify the plant health of the plant material at the identified locations. The system further uses the altitude data to determine the strata of plants at the identified locations. Optionally, the system can further process the images to identify the soil moisture levels at the identified locations. The method disclosed in US11074447 requires a high overlap of data to allow stitching of the obtained images to cover the complete field.

Many phenotyping algorithms require very high resolution (mm or sub-mm resolution) imagery to calculate specific plant or soil characteristics. The cost as well as the operational complexity for data collection and processing (SfM) of such high-resolution drone data is extremely high. This can be considered as the biggest limiting factor to further apply high resolution drone data and derived trait algorithms for plant phenotyping at scale.

The present invention aims to provide a methodology for drone-based image acquisition and processing such that the user needs much less data, allowing him/her to obtain imagery much faster compared to current state of the art methods with a limited and acceptable compromise on the geometrical accuracy of the results. This allows the user to deploy the solution at scale for agricultural experimental fields in an agricultural context, with a considerably reduced total cost.

### Summary of the invention

The present invention concerns a drone monitoring method for observing and monitoring agricultural testing fields according to claim 1 and a drone monitoring system according to claim 10. Further preferred embodiments are disclosed in the dependent claims and further below in the present document.

The present invention allows to obtain data on the plants in the agricultural testing fields, without the need of stitching, and thus without the need for overlap. In fact, in a preferred embodiment of the present invention, the data obtained at the 3D sampling points comprise an overlap of at most 20%, preferably at most 10%, more preferably at most 5%, still more preferably at most 2%, most preferably the data obtained at the 3D sampling points comprise no overlap. On top, for locations in between the plots, no data is required. Alternatively or additionally, data is obtained twice or more times of at most 20% of an area of a plot, preferably at most 10%, more preferably at most 5%, still more preferably at most 2% of an area of a plot, most preferably no data is obtained twice or more times of any area of a plot. The data preferably comprise image data. Alternatively or additionally, the data comprise LIDAR data. LIDAR data or Light detection and ranging (lidar) data is generally known to the skilled person. LIDAR is a technology used to create high-resolution models of ground, using sensors that detect the reflections of a pulsed laser beam. The reflections can be recorded as millions of individual points, collectively called a "point cloud," that represent the 3D positions of objects on the surface including buildings, vegetation, and the ground. At the same time, the present invention allows to obtain data at very low height, said data thus being very detailed, e.g. with a resolution of 10cm or better, preferably 3cm or better, such as 2.5cm, 2.0cm, 1.5cm 1.0cm or any value therebetween, and preferably 10mm or better, such as 10mm, 9mm, 8mm, 7mm, 6mm, 5mm or any value therebetween, and even more preferably 5mm or better, such 4mm, 3mm, 2mm or any value therebetween or better.

The present invention is particularly useful for fields for which the requirement to obtain detailed local information is higher than the requirement of getting a complete overview of the field, including parts of the field not belonging to the experiment. This is particularly useful for agricultural testing fields, whereby the monitoring of characteristics of individual plant specimens is important, and optionally whereby complete statistics of entire plots is of smaller importance.

The present invention allows acquiring data using prior knowledge on the exact location of the individual plots in the testing fields to define locations, i.c. the 3D sampling points, to take the drone data, in particular drone images and/or drone LIDAR data. This can be done on a relative close distance to the plant to be able to increase the spatial details of the images and, at the same time, eliminate the effect of the low accurate viewing geometry of the sensor. The lower a sensor is to an object, the lower the absolute effect of an error in the viewing geometry, until the error is within an acceptable range. To accurately predetermine an altitude of the drone, an accurate digital elevation model and an indicator of the plant height at the moment of the drone flight is used. Note that in the present invention, the altitude of the 3D sampling point is predefined for the drone on the basis of prior knowledge of the plot location and the 2D sampling point, in contrast with e.g. methods wherein the altitude of the 3D sampling point, i.e. the 3D point at which the data is acquired, is undetermined prior to the drone reaching the 2D or 3D sampling point. In an embodiment, the drone is configured to obtain and/or measure the altitude above the field and to steer the drone towards the predefined altitude based on the obtained and/or measured altitude, i.e. the drone comprises a steering algorithm for ensuring that it can position itself at the predetermined altitude.

The present invention provides an improved system and method for high resolution images without redundance due to overlap. The invention aims to provide high-resolution images from predetermined viewpoints, each viewpoint being linked to a plot. This also allows to identify a plot from data obtained at a 3D sampling point, preferably from metadata which may be comprised in said data.

Furthermore, an additional advantage of the present invention compared to prior art methods, is that the method allows handling of moving crops or plants, e.g. due to wind or other weather conditions. This is due to the sampling points being predefined, meaning that the location is specified up front and the user can be certain that the same crops are being imaged at different imaging sessions, even if the crop is moving due to weather conditions. This is more difficult to achieve for prior art methods which try to obtain a 3D model by stereoscopic imaging.

### Overview of the figures

Fig.1 illustrates an overview of an experimental field.
Fig. 2 illustrates an overview of an experimental field, overlayed with boundary of individual plots.
Fig. 3 illustrates drone data 2D sampling points based on 2D locations of individual plots in experimental field.
Fig. 4 illustrates drone data points based on structure from motion for high resolution, low altitude flights.
Fig. 5 illustrates drone data points based on structure from motion for low resolution, high altitude drone flights.

### Detailed description of the invention

The present invention concerns a drone monitoring method for observing and monitoring agricultural testing fields.

The method comprises the step of:
(a) dividing the testing fields in a set of plots, each of the plots defined in a geographic information system, the plots being defined by coordinate information of boundaries of 2D polygons;

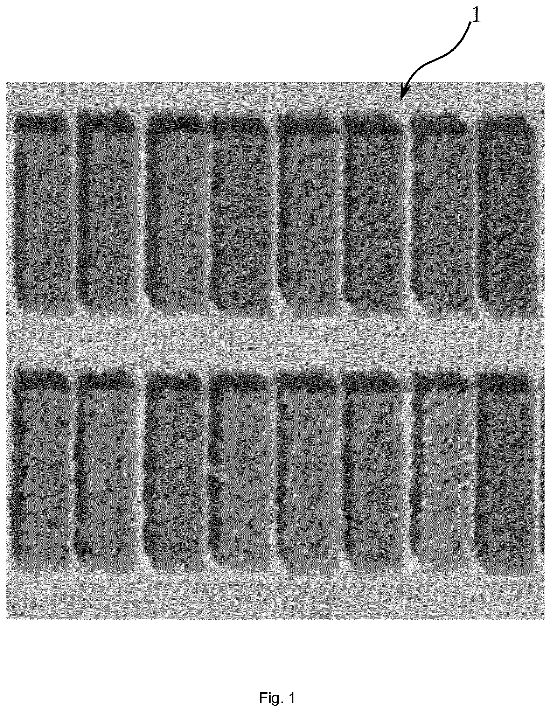

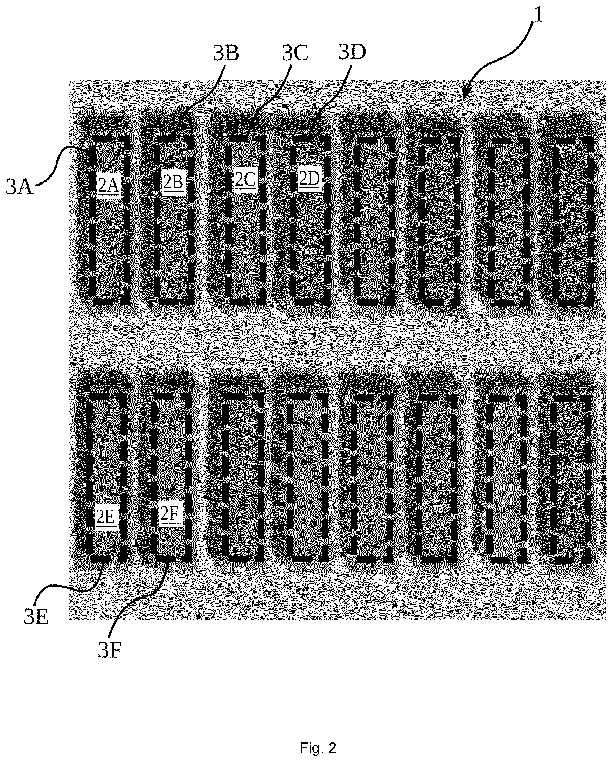

Testing fields, also called experimental fields within the context of the present application, typically contain a number of plots, whereby in each plot, a specific type of plant, e.g. a plant species or a plant variation, is grown according to predefined experimental growing conditions. The type of plant and/or the experimental growing conditions may vary for different plots. The idea behind the division of the testing field into plots, which can typically be located very close to one another, is that the differences in traits for different types of plants and/or for different growing conditions can be experimentally tested with a minimum of variation in other variables, such as weather conditions. In order to allow a clear distinction between plots, their boundaries need to be well defined. Basically, this is done using 2D polygonal boundaries. Note that certain other types of geometries, e.g. elliptical or circular boundaries, may be easily approximated using 2D polygonal boundaries. However, in order to easily connect the plots to their geographic location, polygonal boundaries are preferred. Fig. 1 illustrates an overview of an experimental field (1) and fig. 2 illustrates an overview of the experimental field (1), overlayed with 2D polygonal (rectangular) boundaries (3A, 3B, 3C, 3D, 3E, 3F) for the individual plots (2A, 2B, 2C, 2D, 2E, 2F).

The method further comprises the step of:
(b) defining at least one 2D sampling point in each plot for acquiring drone data, thereby obtaining a set of 2D sampling points;

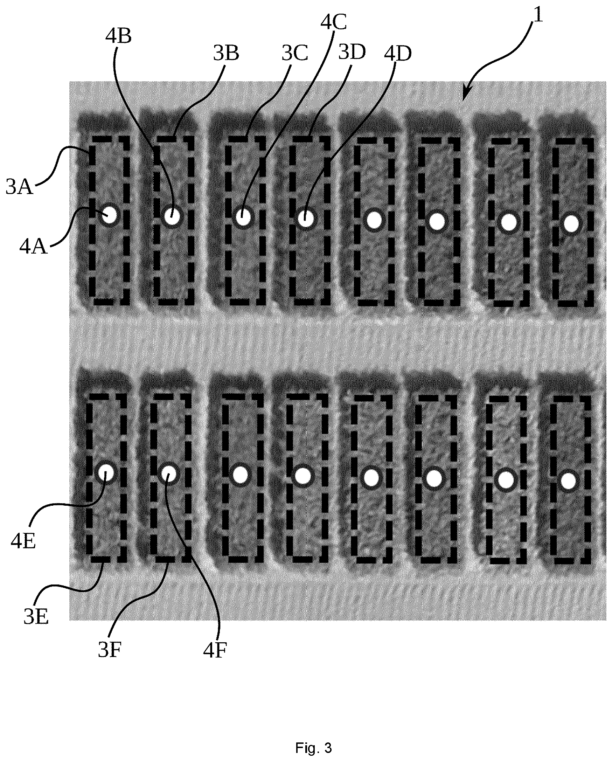

These 2D sampling points (4A, 4B, 4C, 4D, 4E, 4F) are illustrated for the respective plots with their respective boundaries (3A-3F) in fig. 3. In a preferred embodiment, multiple plots comprise respective boundaries comprising the same shape, and, also preferably, the drone comprises a data acquisition sensor having a geometry corresponding to said shape of the boundary. This allows to obtain data optimally for each plot with a minimum of sampling points.

In a preferred embodiment, said 2D sampling points essentially comprise plot centers of each plot, i.e. for each plot, the 2D polygonal boundary may define a center, preferably a geometric center, which can be selected as the 2D sampling point. Preferably a single 2D sampling point is used for each plot. However, in some embodiments, said at least one 2D sampling point in each plot comprises two or more 2D sampling points. Although the present invention is focused on obtaining relevant data with a minimum of samples, more than 1 sampling points may be used, for instance in case of large and/or elongated plots, or in case stereoscopic data is desired, which may require obtaining data from different locations and/or under different angles for the same plot.

The method further comprises the step of:
(c) overlaying the set of 2D sampling points with a digital elevation model , thereby obtaining an altitude reference height for each of the 2D sampling points;

A digital elevation model (DEM) can be obtained from data acquired from e.g. a drone inspection round whereby a drone obtains data of the complete field, e.g. using prior art techniques, for instance a structure from motion technique. Note that such drone inspection round may only need to be performed once, or possible only few times, with low resolution while the present invention can be repeated easily on a daily, or even hourly basis on high resolution. Alternatively, the DEM can be obtained from databases, such as a geographic information system database. For instance, data from a google earth database can be used. Google Earth is a computer program that renders a 3D representation of Earth based primarily on satellite imagery. The program maps the Earth by superimposing satellite images, aerial photography, and GIS data onto a 3D globe, allowing users to see landscapes from various angles. Additionally or alternatively, high accurate (2-3cm) digital terrain model (DTM) data from a local government or company derived from airborne mapping campaigns with photogrammetric camera's or LIDAR can be used.

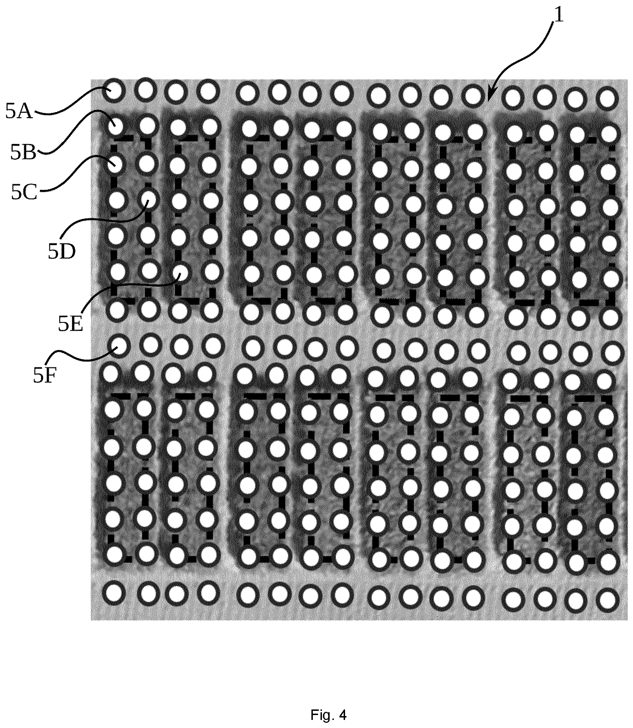

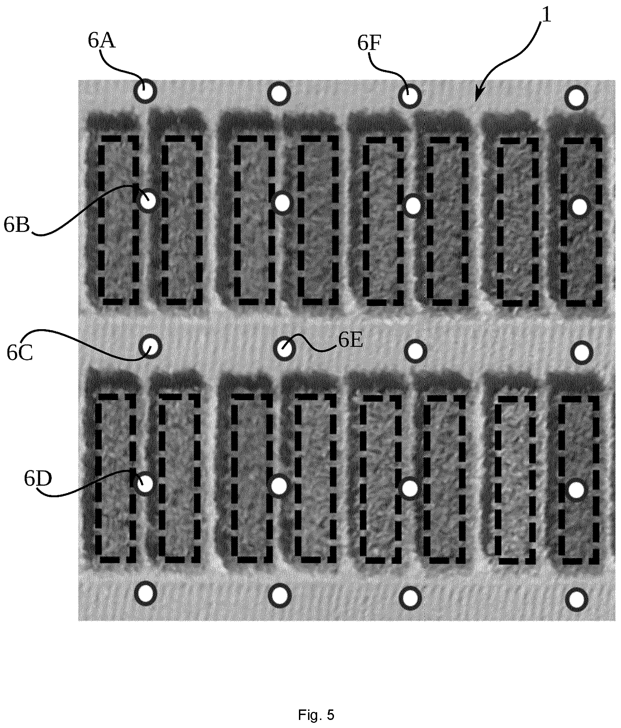

Fig. 4 illustrates drone data points (5A, 5B, 5C, 5D, 5E, 5F) based on structure from motion for high resolution, low altitude flights, whereby, the overlap ratio can be very large. Fig. 5 illustrates drone data points (6A, 6B, 6C, 6D, 6E, 6F) based on structure from motion for low resolution, high altitude drone flights, whereby the resolution may be too low to derive certain traits from e.g. image data. Hereby, one can see that a multitude of data is acquired, which is not useful for obtaining trait characteristics of the plants, but is needed to make a stitched view on the field. Further note that typically, the 2D sampling points in structure from motion techniques are not predefined. Although such techniques lead to a high data load and intense computing, they can be used to obtain the DEM and the altitude reference height.

The method further comprises the steps of:
(d) for each 2D sampling point: determining an altitude coordinate corresponding to said 2D sampling point on the basis of the altitude reference height for said 2D sampling point, and
(e) for each 2D sampling point: determining a 3D sampling point by combining said 2D sampling point with the altitude coordinate corresponding to said 2D sampling point, and
wherein the altitude coordinate is determined by taking into account a canopy height at the 2D sampling point.

It is important to note that the altitude coordinates for each of the 2D sampling points is obtained prior to the actual acquisition of the data by the drone. The altitude coordinate depends on the altitude reference height and the canopy height of the plants. In some embodiments, the altitude reference height already incorporates the canopy height, for instance if the DEM is obtained by a recent drone inspection round. However, in other embodiments, the canopy height is provided separately to the method, e.g. by a user or calculated by a plant growth model. In an embodiment, the canopy height at the 2D sampling point is provided using a digital surface model. Alternatively, or additionally, the canopy height at the 2D sampling point is provided by user input.

In embodiments, the DEM is any of the following: a digital surface model, a digital terrain model, a digital canopy height (DCH) model. Examples of such models can be found in e.g. "Forest Assessment Using High Resolution SAR Data in X-Band", by Perko et al., Remote Sensing 3(4):792-815, April 2011, DOI:10.3390/rs3040792. Note that a DCH can typically be obtained from the difference between DSM and DTM. DSM may preferably be calculated directly from a drone flight acquired close to the drone sampling flight or from a DTM obtained from earlier data combined with plant-height estimation or a DCH model. Altitude above the canopy height is determined by the required resolution and drone image sensor used. In case the canopy height is very small, e.g. because the plant heights are low, the DCH can be discarded.

In an embodiment, the altitude coordinate is determined as a minimal height above the canopy height, said minimal height being a safety minimal height. In order to obtain the most detailed and accurate data, preferably the altitude coordinate is minimal. However, some safety precautions are needed to ensure that the drone itself does not influence the data. For instance, in case the drone is an aerial drone, air displacement from e.g. rotors of the drone, should not influence the data acquisition. Hence, a minimal altitude of e.g. about 1m above the canopy may be required.

In an embodiment, the altitude coordinate is a value between a minimal height above the canopy height and a maximal height above the canopy height, said minimal height being a safety minimal height and said maximal height being determined by a drone resolution, a required image detail, a required geometrical accuracy and/or image positional and viewing angle accuracies. The required image detail is essentially determined by the plant characteristics under investigation. The required geometrical accuracy is essentially determined by the plot size and distances between the plots. The viewing angle and positional accuracies are essentially depending on the drone characteristics and/or sensor characteristics of a sensor on the drone. Better viewing angle and positional accuracies allow to fly higher above the canopy. In embodiments of the present invention, the maximal height above the canopy height is at most 20m, such as 20m, 19m, 18m, 17m, 16m, 15m, or any value therebetween, more preferably at most 15m, such as 15m, 14m, 13m, 12m, 11m, 10m or any value therebetween, still more preferably at most 10m, 9m, 8m, 7m, 6m, 5m or any value therebetween, yet more preferably at most 5m, such as 5m, 4m, 3m, 2m, 1m or any value therebetween or lower. In embodiments of the present invention, the minimal height above the canopy height is at least 1cm, such as 1cm, 2cm, 3cm, 4cm, 5cm, or any value therebetween, more preferably at least 5cm, such as 5cm, 10cm, 15cm, 20cm, 25cm, 30cm, 35cm 40cm, 45cm, 50cm or any value therebetween or higher.

In a preferred embodiment, the drone monitoring method comprises the further steps of:
(f) sending a drone to the 3D sampling points, preferably sequentially and preferably in a single data acquisitioning round, e.g. a single flight in case the drone is an aerial drone, and
(g) obtaining data at each of the 3D sampling points by the drone.

Data can preferably be obtained by the drone while the drone is moving or while the drone halts for a period.

The present invention thereto also concerns a drone monitoring system, comprising a processing subsystem and at least one drone, wherein the processing subsystem is configured to perform the method according to any one of the previous claims, and wherein the drone is configured to move to the 3D sampling points, preferably sequentially and preferably in a single flight, and to obtain data at each of the 3D sampling points. Hereby, preferably, the drone is an aerial drone.

The present invention thereto also concerns a computer readable file comprising a set of 3D sampling points obtained using a method according to the present invention and/or using a system according to the present invention. The computer readable file is preferably a Keyhole Markup Language (KML) file. KML is a file format used to display geographic data in an Earth browser such as Google Earth. KML uses a tag-based structure with nested elements and attributes and is based on the XML standard. All tags are case-sensitive and must appear exactly as they are listed in the KML Reference. The Reference indicates which tags are optional. Within a given element, tags must appear in the order shown in the Reference. Preferably hereby, the set of 3D sampling points comprise a sequential ordering which determines a path of the drone.

In embodiments, obtaining data comprises obtaining image data, optionally said image data comprising a set of images obtained under a multitude of different angles. Alternatively or additionally, obtaining data comprises obtaining LIDAR data.

The drone monitoring method preferably comprises the further step of:
(h) analyzing said data obtained by said drone, preferably by:
(h1) ) georeferencing the data based on sensor location, and/or
(h2) georeferencing the data based on sensor exterior orientation parameters, sensor interior parameters and the digital elevation model, and/or
(h3) executing a trait algorithm to extract plant traits from said data.

Georeferencing the data may hereby be based on e.g. image center if the data comprises image data, whereby the center of the image is used to georeferenced the image. However, in embodiments, georeferencing the data may involve georeferencing every data point in the data, for instance, if the data comprises image data, each pixel in the image may be georeferenced.

Hereby, the sensor exterior orientation parameters typically may comprise geographical location as obtained via e.g. GPS or any other positioning system or tool. The sensor exterior orientation parameters typically may also comprise external orientation, which represents under which angles the data is obtained. These angles may typically represent roll, pitch and/or yaw of the drone or of a data acquisition sensor on the drone.

Internal orientation parameters may comprise e.g. ccd characteristics, pixel density, focal length, lens distortion, ppx (pixel density in an x-direction), ppy (pixel density in a y-direction perpendicular to the x-direction), lens properties, e.g. in the case a wide angle lens or zoom lens is used to obtain the data.

A DEM can used as for instance disclosed in "High Throughput Field Phenotyping for Plant Height Using UAV-Based RGB Imagery in Wheat Breeding Lines: Feasibility and Validation", by Volpato et al., Front. Plant Sci., 16 February 2021, Sec. Plant Breeding, Volume 12 - 2021, https://doi.org/10.3389/fpls.2021.591587.

Preferably, georeferencing the data comprises direct georeferencing the data, for instance as explained in
- "Direct georeferencing on small unmanned aerial platforms for improved reliability and accuracy of mapping without the need for ground control points", by Mian et al., The International Archives of the Photogrammetry, Remote Sensing and Spatial Information Sciences, Volume XL-1/W4, 2015, International Conference on Unmanned Aerial Vehicles in Geomatics, 30 Aug-02 Sep 2015, Toronto, Canada, and/or in
- "Static error budget analysis for a land-based dual-camera mobile mapping system", by Jiann-Yeou Rau et al., Journal of the Chinese Institute of Engineers, Vol. 34, No. 7, October 2011, 849-862.

In a preferred method, the data obtained at the 3D sampling points comprise an overlap of at most 20%, preferably at most 10%, more preferably at most 5%, still more preferably at most 2%, most preferably the data obtained at the 3D sampling points comprise no overlap.

In a preferred embodiment, the drone monitoring method comprises repeating the steps (d), (e) and any further steps at different times to obtain data at said different times, thereby allowing observing and monitoring the agricultural testing fields over long periods, optionally whereby step (c) is also repeated at different times in cases where said digital elevation model has been altered between said different times. Note that hereby, the same set of 2D sampling points is used, i.e. the set of 2D sampling points as defined in steps (a) and (b), allowing e.g. georeferencing across repeated data acquisition rounds. Preferably, the data is obtained in the same manner across repeated data acquisition rounds.

Note that in the present invention, the drone may be any type of drone which can be steered to a 3D sampling point comprising a predefined altitude. However, preferably, the drone is an aerial drone, i.e. capable of flight.

Preferably the drone comprises a sensor or a camera which is altitude-steerable, i.e. its altitude can be controllably changed. Preferably, the drone comprises a locator capable of keeping track of the location of the drone, this locator may comprise a GPS chip.

Preferably the drone comprises a locator which is accurate to within 10 cm or better, such as 10cm, 9cm, 8cm, 7cm, 6cm, 5cm, 4cm, 3cm, 2cm or any value there between or better. Preferably the drone is an real-time-kinematic (RTK) drone. Real-time kinematic positioning (RTK) is the application of surveying to correct for common errors in current satellite navigation (GNSS) systems. The drone can hereby be located within an accuracy of 2 to 3 cm.

## Claims

1. A drone monitoring method for observing and monitoring agricultural testing fields, comprising the steps of:
(a) dividing the testing fields in a set of plots, each of the plots being defined in a geographic information system, the plots being defined by coordinate information of boundaries of 2D polygons;
(b) defining at least one 2D sampling point in each plot for acquiring drone data, thereby obtaining a set of 2D sampling points;
(c) overlaying the set of 2D sampling points with a digital elevation model, thereby obtaining an altitude reference height for each of the 2D sampling points;
(d) for each 2D sampling point: determining an altitude coordinate corresponding to said 2D sampling point on the basis of the altitude reference height for said 2D sampling point;
(e) for each 2D sampling point: determining a 3D sampling point by combining said 2D sampling point with the altitude coordinate corresponding to said 2D sampling point, and
wherein the altitude coordinate is determined by taking into account a canopy height at the 2D sampling point.

2. A drone monitoring method according to any one of the previous claims, wherein the canopy height at the 2D sampling point is provided using a digital surface model.

3. A drone monitoring method according to any one of the previous claims, wherein the canopy height at the 2D sampling point is provided by user input.

4. A drone monitoring method according to any one of the previous claims, wherein the altitude coordinate is determined as a minimal height above the canopy height, said minimal height being a safety minimal height.

5. A drone monitoring method according to any one of the previous claims, wherein the altitude coordinate is a value between a minimal height above the canopy height and a maximal height above the canopy height, said minimal height being a safety minimal height and said maximal height being determined by a drone resolution, a required image detail, a required geometrical accuracy and/or image positional and viewing angle accuracies.

6. A drone monitoring method according to any one of the previous claims, comprising the further steps of:
(f) sending a drone to the 3D sampling points, preferably sequentially and preferably in a single data acquisitioning round, and
(g) obtaining data at each of the 3D sampling points by the drone.

7. A drone monitoring method according to claim 6, comprising the further step of:
(h) analyzing said data obtained by said drone, preferably by:
(h1) georeferencing the data based on sensor location, and/or
(h2) georeferencing the data based on sensor exterior orientation parameters, sensor interior parameters and the digital elevation model, and/or
(h3) executing an algorithm to extract plant traits from said data.

8. A drone monitoring method according to any of the claims 6 or 7, whereby the data obtained at the 3D sampling points comprise an overlap of at most 20%, preferably at most 10%, more preferably at most 5%, still more preferably at most 2%, most preferably the data obtained at the 3D sampling points comprise no overlap.

9. A drone monitoring method according to any of the claims 6 to 8, whereby data is obtained twice or more times of at most 20% of an area of a plot, preferably at most 10%, more preferably at most 5%, still more preferably at most 2% of an area of a plot, most preferably no data is obtained twice or more times of any area of a plot.

10. A drone monitoring method according to any one of the previous claims, comprising repeating the steps (d), (e) and any further steps at different times to obtain data at said different times, thereby allowing observing and monitoring the agricultural testing fields over long periods, optionally whereby step (c) is also repeated at different times in cases where said digital elevation model has been altered between said different times.

11. A drone monitoring system, comprising a processing subsystem and at least one drone, wherein the processing subsystem is configured to perform the method according to any one of the previous claims, and wherein the drone is configured to move to the 3D sampling points, preferably sequentially and preferably in a single flight, and to obtain data at each of the 3D sampling points.

12. A drone monitoring system according to claim 11, wherein the drone is an aerial drone.

13. A computer readable file comprising a set of 3D sampling points obtained using a method according to any of the claims 1 to 10 and/or using a system according to any of the claims 11 or 12.

14. A computer readable file according to claim 13, which is a KML file.

15. A computer readable file according to any of the claims 13 or 14, wherein the set of 3D sampling points comprise a sequential ordering which determines a path of the drone.

## Patentansprüche

1. Drohnenüberwachungsverfahren zum Beobachten und Überwachen landwirtschaftlicher Versuchsfelder, das die folgenden Schritte umfasst:
(a) Teilen der Versuchsfelder in einen Satz von Parzellen, wobei jede der Parzellen in einem geographischen Informationssystem definiert wird, wobei die Parzellen durch Koordinateninformationen von Grenzen von 2D-Polygonen definiert werden;
(b) Definieren mindestens eines 2D-Abtastpunkts in jeder Parzelle zum Erheben von Drohnendaten, wodurch ein Satz von 2D-Abtastpunkten erhalten wird;
(c) Überlagern des Satzes von 2D-Abtastpunkten mit einem digitalen Höhenmodell, wodurch eine Referenzhöhe für jeden der 2D-Abtastpunkte erhalten wird;
(d) für jeden 2D-Abtastpunkt: Bestimmen einer Höhenkoordinate, die dem 2D-Abtastpunkt entspricht, auf der Grundlage der Referenzhöhe für den 2D-Abtastpunkt;
(e) für jeden 2D-Abtastpunkt: Bestimmen eines 3D-Abtastpunkts durch Kombinieren des 2D-Abtastpunkts mit der Höhenkoordinate, die dem 2D-Abtastpunkt entspricht, und
wobei die Höhenkoordinate durch Berücksichtigen einer Kronendachhöhe an dem 2D-Abtastpunkt bestimmt wird.

2. Drohnenüberwachungsverfahren nach einem der vorherigen Ansprüche, wobei die Kronendachhöhe an dem 2D-Abtastpunkt unter Verwendung eines digitalen Oberflächenmodells bereitgestellt wird.

3. Drohnenüberwachungsverfahren nach einem der vorherigen Ansprüche, wobei die Kronendachhöhe an dem 2D-Abtastpunkt durch Benutzereingabe bereitgestellt wird.

4. Drohnenüberwachungsverfahren nach einem der vorherigen Ansprüche, wobei die Höhenkoordinate als eine Mindesthöhe über der Kronendachhöhe bestimmt wird, wobei die Mindesthöhe eine Sicherheitsmindesthöhe ist.

5. Drohnenüberwachungsverfahren nach einem der vorherigen Ansprüche, wobei die Höhenkoordinate ein Wert zwischen einer Mindesthöhe über der Kronendachhöhe und einer maximalen Höhe über der Kronendachhöhe ist, wobei die Mindesthöhe eine Sicherheitsmindesthöhe ist, und die maximale Höhe durch eine Drohnenauflösung, ein erhobenes Bilddetail, eine geforderte geometrische Genauigkeit und/oder Bildpositions- und Blickwinkelgenauigkeiten bestimmt wird.

6. Drohnenüberwachungsverfahren nach einem der vorherigen Ansprüche, das die folgenden weiteren Schritte umfasst:
(f) Senden einer Drohne zu den 3D-Abtastpunkten, bevorzugt sequenziell und bevorzugt in einem einzigen Datenerhebungsdurchgang, und
(g) Erhalten von Daten an jedem der 3D-Abtastpunkte durch die Drohne.

7. Drohnenüberwachungsverfahren nach Anspruch 6, das die folgenden weiteren Schritte umfasst:
(h) Analysieren von Daten, die von der Drohne erhalten werden, bevorzugt durch:
(h1) Georeferenzieren der Daten basierend auf Sensorort, und/oder
(h2) Georeferenzieren der Daten basierend auf Sensoraußenorientierungsparametern, Sensorinnenparametern und dem digitalen Höhenmodell, und/oder
(h3) Ausführen eines Algorithmus zum Extrahieren von Pflanzenmerkmalen aus den Daten.

8. Drohnenüberwachungsverfahren nach einem der Ansprüche 6 oder 7, wodurch die Daten, die an den 3D-Abtastpunkten erhalten werden, eine Überlappung von höchstens 20 %, bevorzugt höchstens 10 %, bevorzugter höchstens 5 %, noch bevorzugter höchstens 2 %, wobei besonders bevorzugt die an den 3D-Abtastpunkten erhaltenen Daten keine Überlappung umfassen.

9. Drohnenüberwachungsverfahren nach einem der Ansprüche 6 bis 8, wodurch Daten zweimal oder öfter von höchstens 20 % einer Fläche einer Parzelle, bevorzugt höchstens 10 %, bevorzugter höchstens 5 %, noch bevorzugter höchstens 2 % einer Fläche einer Parzelle erhalten werden, und wobei besonders bevorzugt keine Daten zweimal oder öfter von einer Fläche einer Parzelle erhalten werden.

10. Drohnenüberwachungsverfahren nach einem der vorherigen Ansprüche, das das Wiederholen der Schritte (d), (e) und weitere Schritte zu unterschiedlichen Zeiten umfasst, um Daten zu unterschiedlichen Zeiten zu erhalten, wodurch das Beobachten und Überwachen der landwirtschaftlichen Versuchsfelder über lange Zeitspannen erlaubt werden, wodurch optional Schritt (c) auch zu unterschiedlichen Zeiten in Fällen wiederholt wird, in welchen das digitale Höhenmodell zwischen den unterschiedlichen Zeiten abgeändert wurde.

11. Drohnenüberwachungssystem, das ein Verarbeitungsteilsystem und mindestens eine Drohne umfasst, wobei das Verarbeitungsteilsystem dazu konfiguriert ist, das Verfahren nach einem der vorherigen Ansprüche durchzuführen, und wobei die Drohne dazu konfiguriert ist, sich zu den 3D-Abtastpunkten zu bewegen, bevorzugt sequenziell und bevorzugt in einem einzigen Flug, und Daten an jedem der 3D-Abtastpunkte zu erhalten.

12. Drohnenüberwachungssystem nach Anspruch 11, wobei die Drohne eine Flugdrohne ist.

13. Computerlesbare Datei, die einen Satz von 3D-Abtastpunkten umfasst, die unter Verwendung eines Verfahrens nach einem der Ansprüche 1 bis 10 und/oder unter Verwendung eines Systems nach einem der Ansprüche 11 oder 12 erhalten werden.

14. Computerlesbare Datei nach Anspruch 13, die eine KML-Datei ist.

15. Computerlesbare Datei nach einem der Ansprüche 13 oder 14, wobei der Satz von 3D-Abtastpunkten eine sequenzielle Reihenfolge umfasst, die einen Pfad der Drohne bestimmt.

## Revendications

1. Procédé de surveillance par drone pour observer et surveiller des champs d'essais agricoles, comprenant les étapes suivantes :
(a) diviser les champs d'essais en un ensemble de parcelles, chacune des parcelles étant définie dans un système d'information géographique, les parcelles étant définies par des informations de coordonnées de limites de polygones 2D ;
(b) définir au moins un point d'échantillonnage 2D dans chaque parcelle pour acquérir des données par drone, obtenant de ce fait un ensemble de points d'échantillonnage 2D ;
(c) superposer l'ensemble de points d'échantillonnage 2D avec un modèle numérique d'élévation, obtenant de ce fait une hauteur de référence d'altitude pour chacun des points d'échantillonnage 2D ;
(d) pour chaque point d'échantillonnage 2D : déterminer une coordonnée d'altitude correspondant audit point d'échantillonnage 2D sur la base de la hauteur de référence d'altitude pour ledit point d'échantillonnage 2D ;
(e) pour chaque point d'échantillonnage 2D : déterminer un point d'échantillonnage 3D en combinant ledit point d'échantillonnage 2D avec la coordonnée d'altitude correspondant audit point d'échantillonnage 2D, et
dans lequel la coordonnée d'altitude est déterminée en tenant compte d'une hauteur de canopée au niveau du point d'échantillonnage 2D.

2. Procédé de surveillance par drone selon l'une quelconque des revendications précédentes, dans lequel la hauteur de canopée au niveau du point d'échantillonnage 2D est fournie en utilisant un modèle numérique de surface.

3. Procédé de surveillance par drone selon l'une quelconque des revendications précédentes, dans lequel la hauteur de canopée au niveau du point d'échantillonnage 2D est fournie par une entrée utilisateur.

4. Procédé de surveillance par drone selon l'une quelconque des revendications précédentes, dans lequel la coordonnée d'altitude est déterminée comme une hauteur minimale au-dessus de la hauteur de canopée, ladite hauteur minimale étant une hauteur minimale de sécurité.

5. Procédé de surveillance par drone selon l'une quelconque des revendications précédentes, dans lequel la coordonnée d'altitude est une valeur entre une hauteur minimale au-dessus de la hauteur de canopée et une hauteur maximale au-dessus de la hauteur de canopée, ladite hauteur minimale étant une hauteur minimale de sécurité et ladite hauteur maximale étant déterminée par une résolution du drone, un niveau de détail d'image requis, une précision géométrique requise et/ou des précisions de position et d'angle de vue d'image.

6. Procédé de surveillance par drone selon l'une quelconque des revendications précédentes, comprenant les étapes supplémentaires suivantes :
(f) envoyer un drone aux points d'échantillonnage 3D, de préférence de manière séquentielle et de préférence en un seul cycle d'acquisition de données, et
(g) obtenir des données au niveau de chacun des points d'échantillonnage 3D par le drone.

7. Procédé de surveillance par drone selon la revendication 6, comprenant l'étape supplémentaire suivante :
(h) analyser lesdites données obtenues par ledit drone, de préférence par :
(h1) géoréférencement des données sur la base d'un emplacement de capteur, et/ou
(h2) géoréférencement des données sur la base de paramètres d'orientation extérieure de capteur, de paramètres intérieurs de capteur et du modèle numérique d'élévation, et/ou
(h3) exécuter un algorithme pour extraire des caractéristiques de plantes à partir desdites données.

8. Procédé de surveillance par drone selon l'une quelconque des revendications 6 ou 7, de sorte que les données obtenues au niveau des points d'échantillonnage 3D comprennent un chevauchement d'au plus 20 %, de préférence d'au plus 10 %, plus de préférence d'au plus 5 %, encore plus de préférence d'au plus 2 %, de façon la plus préférable les données obtenues au niveau des points d'échantillonnage 3D ne comprennent aucun chevauchement.

9. Procédé de surveillance par drone selon l'une quelconque des revendications 6 à 8, de sorte que des données sont obtenues deux fois ou plus sur au plus 20 % d'une superficie d'une parcelle, de préférence au plus 10 %, plus de préférence au plus 5 %, encore plus de préférence au plus 2 % d'une superficie d'une parcelle, de façon la plus préférable aucune donnée n'est obtenue deux fois ou plus sur une superficie quelconque d'une parcelle.

10. Procédé de surveillance par drone selon l'une quelconque des revendications précédentes, comprenant la répétition des étapes (d), (e) et toutes autres étapes supplémentaires à différents moments pour obtenir des données à ces dits différents moments, permettant de ce fait d'observer et de surveiller les champs d'essais agricoles sur de longues périodes, de manière optionnelle de sorte que l'étape (c) est également répétée à différents moments dans les cas où ledit modèle numérique d'élévation a été modifié entre lesdits différents moments.

11. Système de surveillance par drone, comprenant un sous-système de traitement et au moins un drone, dans lequel le sous-système de traitement est configuré pour exécuter le procédé selon l'une quelconque des revendications précédentes, et dans lequel le drone est configuré pour se déplacer vers les points d'échantillonnage 3D, de préférence de manière séquentielle et de préférence en un seul vol, et pour obtenir des données au niveau de chacun des points d'échantillonnage 3D.

12. Système de surveillance par drone selon la revendication 11, dans lequel le drone est un drone aérien.

13. Fichier lisible par ordinateur comprenant un ensemble de points d'échantillonnage 3D obtenus à l'aide d'un procédé selon l'une quelconque des revendications 1 à 10 et/ou à l'aide d'un système selon l'une quelconque des revendications 11 ou 12.

14. Fichier lisible par ordinateur selon la revendication 13, qui est un fichier KML.

15. Fichier lisible par ordinateur selon l'une quelconque des revendications 13 ou 14, dans lequel l'ensemble de points d'échantillonnage 3D comprend un ordre séquentiel qui détermine un trajet du drone.
